# EUROPÄISCHE PATENTSCHRIFT

(11) **EP 2 563 732 B1**
(45) Veröffentlichungstag und Bekanntmachung des Hinweises auf die Patenterteilung: **19.12.2018**
(21) Anmeldenummer: 11722279.4
(22) Anmeldetag: 27.04.2011
(51) Int. Cl.: C03C 4/02, C03C 14/00, C03C 1/10, C03C 3/095, C03C 3/118

(54) **ROT GEFÄRBTES GLAS UND VERFAHREN ZU DESSEN HERSTELLUNG**
RED-DYED GLASS AND METHOD FOR PRODUCING SAME
VERRE TEINTÉ ROUGE ET PROCÉDÉ DE FABRICATION DUDIT VERRE

(30) Priorität: 28.04.2010 AT 6962010
(43) Veröffentlichungstag der Anmeldung: 06.03.2013
(73) Patentinhaber: D. Swarovski KG, 6112 Wattens (AT)
(72) Erfinder: PROWATKE, Stefan, A-6112 Wattens (AT); MAIER, Johannes, A-6020 Innsbruck (AT)
(74) Vertreter: Moore, Michael Richard
(86) Internationale Anmeldenummer: PCT/AT2011/000207
(87) Internationale Veröffentlichungsnummer: WO 2011/133994

(56) Entgegenhaltungen:
- DE-A1- 4 231 794
- DE-A1-102004 026 257
- DE-C- 571 017
- US-A- 4 134 747
- BRING ET AL.: "Colour development in copper ruby alkali silicate glasses. Part 2. The effect of tin (II) oxide and antimony (III) oxide", GLASS TECHNOLOGY: EUROPEAN JOURNAL OF GLASS SCIENCE AND TECHNOLOGY PART A, Bd. 48, Nr. 3, Juni 2007 (2007-06), Seiten 142-148, XP001510484,
- "Neodymium" In: C. R. Bamford: "Colour Generation and Control in Glass", 1977, XP007919191, ISBN: 0-444-41614-5 Seite 70-71, Abbildung 3.1.
- "Glasses Colored by Metal Colloids (Ruby Glasses)" In: Werner Vogel: "Glass Chemistry", 1994, XP007919189, ISBN: 3-540-57572-3 Seiten 246-250, Seite 247, Zeile 1

## Beschreibung

Die Erfindung betrifft rot gefärbtes Glas umfassend die Bestandteile eines Grundglases, farbgebende Additive, Reduktionsmittel, Stabilisierungsmittel, wobei die farbgebenden Additive Kupferoxide und Neodymoxide aufweisen und wobei die Reduktionsmittel Zinnoxide aufweisen und wobei die Stabilisierungsmittel Antimonoxide aufweisen.
Im Stand der Technik sind mehrere Methoden bekannt, um für Licht des sichtbaren Spektrums transparente Gläser zu färben. Neben der Anfärbung vom Glas, indem das Glas mit einem färbigem Überzug versehen wird, ist es zur Herstellung von durchgefärbtem Glas üblich, bestimmte Färbemittel zur Glasschmelze bzw. den Bestandteilen der Glasschmelze hinzuzufügen, um dem Glas durch verschiedene Verfahrensschritte die gewünschte Farbe zu verleihen.
Bei Anlautgläsern werden färbende Oxide dem Grundglas hinzugefügt, wobei zur Erzeugung der Farbwirkung nach dem Verschmelzen der mit den färbenden Oxiden vermengten Bestandteile des Grundglases ein weiterer Erhitzungsschritt nötig ist, bei dem das Glas getempert wird. Die Art der erzeugten Farbe hängt dabei von den chemischen Grundbestandteilen sowie van den Prozessparametern, wie zum Beispiel der Temperatur und der Haltedauer des Temperns ab.
Die DE 42 31 794 A1 zeigt rot gefärbte Anlaufgläser, bei denen Färbeoxide in ein durch das Aluminiumsilikatglas gebildetes Wirtgitter eingebunden werden, wobei diese lonenfärbung den Zweck hat, gewisse Spektralbereiche, die für das Ausbilden der roten Farbe hinderlich sind, zu absorbieren. Neben anderen färbenden Oxiden wie NiO und CoO können dafür auch CuO oder Neodymoxid (Nd₂O₃) zusätzlich zum Einsatz kommen. Durch diese Absorption eines Großteils der Wellenlängen des sichtbaren Spektrums, weist das rot gefärbte Glas der DE 42 31 794 einen geringen Transmissionsgrad auf, sodass das Rot dieses gefärbten Glases einen wenig brillanten Eindruck erweckt. Bring et al. ("Colour development in copper ruby alkali silicate glasses. Part 2. The effect of tin (II) oxide and antimony (III) oxide"; Glass Technology: European Journal of Glass Science and Technology Part A, vol. 48, no. 3, June 2007, p 142-148) lehrt rote Anlaufgläser enthaltend in Gew.% 0,06 Cu₂O, 0,15 SnO und 0,33-1 Sb₂O₃. DE571017C lehrt Verahren zun Nuancierung gefärbter Gläser nach Rot mit Neodymoxyd oder Praseodymoxyd. Die Farbe der in DE571017C offenbarten Gläser ändert sich, wenn die Glasdicke von einer sehr blauen Purpurfarbe zu einer roten Purpurfarbe und dann von reinem Rot zu hellem Rot zunimmt. So kann laut DE571017C ein roter Farbton nur bei einer Kombination von Neodym mit Selen und nur bei einer einzigen Glasdicke erreicht werden.

Eine andere Möglichkeit ist es, eine Färbung van Gläsern dadurch zu erreichen, in dem im Glas Metalle in kolloidaler Form ausgeschieden werden, die sich im Glasmedium
fein verteilen. Die durch Diffusion und Aggregation während der Glasherstellung der gelösten Metalle entstandenen Kolloide benötigen keine Wirtkristalle zur Farbbildung. Derartige rot gefärbte Gläser sind beispielsweise Goldrubingläser, die jedoch überaus teuer in ihrer Herstellung sind. Daneben ist es bisher möglich, durch Metallkolloide gefärbte Gläser mit den färbenden Stoffen Cadmium (Cd) und Selen (Se), die zwar optisch hervorragende Eigenschaften, wie eine hohe Transmission und Brillanz aufweisen, aber durch ihre toxische Wirkung aus umwelttechnischen Gründen unerwünscht sind.

Die US 7,612, 003 zeigt ein rot gefärbtes Lampenglas, wobei die rote Färbung durch Metallkolloide, die aus Kupfer(I)-Oxid hervorgehen, erzeugt wird. Der Anteil der Kupferoxide beträgt dabei mindestens 0,1 Gew.-%, sodass die Kupferstoffe im Glas einen hohen Anteil an Rot absorbieren und das rot gefärbte Glas eine geringe Transmission aufweist, welches hinsichtlich seiner optischen Qualitäten nicht an rot gefärbte Gläser, die durch Rotfärbung mit Cadmium und/oder Selen hervorgehen, heranreichen kann.

Aufgabe der Erfindung ist es, die obigen Nachteile zu vermeiden und ein rot gefärbtes Glas zur Verfügung zu stellen, welches eine hohe Transmission bei gleichzeitig hoher Brillanz des Farbtons aufweist und dabei die Verwendung von Umweltgiften, wie zum Beispiel Cadmium vermeidet.

Dies wird durch ein rot gefärbtes Glas mit den Merkmalen des Anspruchs 1 gelöst.

Indem zu den Bestandteilen eines Grundglases farbgebende Additive hinzugefügt werden, die Kupferoxide und Neodymoxide aufweisen, kann auf die Verwendung von Cadmium oder Selen als farbgebendes Mittel verzichtet werden. Das Grundglas kann dabei bleifrei sein. Die Farbgebung erfolgt indem während der Glasherstellung aus den farbgebenden Additiven zunächst Metallkolloide ausgeschieden werden, wobei sich metallische Nanopartikel, insbesondere Kupernanopartikel bilden, die sich zu Kolloiden zusammenfügen. Zu diesem Zweck muss das Kupferoxid zu metallischem Kupfer reduziert werden, weshalb das rot gefärbt Glas Reduktionsmittel umfasst, die Zinnoxide aufweisen. Durch diese Reduktionsmittel wird das Kupferoxid in metallisches Kupfer und in weiterer Folge in Kupfernanopartikel überführt. Zur Stabilisierung der Kupfernanopartikel im Glas weist das Glas Stabilisierungsmittel mit Antimonoxiden, insbesondere Sb₂O₃ auf. Das farbgebende Additiv Neodymoxid, insbesondere Nd₂O₃ erhöht die Absorption der Kupfernanopartikel in von rot verschiedenen Bereichen, wodurch die rote Farbe brillanter wird und gleichzeitig die Gesamttransmission erhöht bzw. möglichst hoch gehalten werden kann.

Erfindungsgemäß beträgt der Anteil der Kupferoxide am rot gefärbten Glas zwischen 0,02 und 0,08 Gew.-% der gesamten Bestandteile des Glases. Durch diesen geringen Wert ist die hohe Transmission des rot gefärbten Glases gewährleistet, wobei in Zusammenhang mit dem verwendeten Neodymoxid die Brillanz der roten Farbe trotz niedrigem Anteil an Kupferoxid sichergestellt wird.

Weitere vorteilhafte Ausführungen der Erfindung sind in den abhängigen Ansprüchen definiert.

Indem vorgesehen ist, dass die Anteile der farbgebenden Additive und der Reduktionsmittel und der Stabilisierungsmittel am rot gefärbten Glas insgesamt zwischen 2 und 8 Gew.-% betragen, wird ein hohe Gesamttransmission bei gleichzeitiger Farbbrillanz der roten Farbe weiter verbessert.

In einer besonders bevorzugten Ausführungsform der Erfindung sind die farbgebenden Kupferoxide, die als Metallkolloidbildner wirken, als einwertiges Kupferoxid, das heißt Kupfer(I)-Oxid (Cu₂O) ausgebildet bzw. sind in dieser Form in das Glas eingebracht. Dieses Kupferoxid wird zu metallischem Kupfer reduziert und wird dadurch für die rote Färbung wirksam. Es ist generell aber auch möglich zweiwertiges Kupfer, das heißt Kupfer(II)-Oxid (CuO) zu verwenden.

In einer bevorzugten Ausführungsform der Erfindung sind die als Reduktionsmittel wirkenden Zinnoxide als SnO ausgebildet bzw. sind in dieser Form in das Glas eingebracht. Dabei werden die Kupferoxide gemäß der Reduktionsformel Cu²⁺ + Sn²⁺ = Cu⁰ + Sn⁴⁺ zu metallischem Kupfer Cu⁰ reduziert, wobei sich diese zu Kupfernanopartikeln und in weiterer Folge zu Kolloiden zusammensetzen, die letztendlich die rote Farbe erzeugen. In einer Ausführungsform der Erfindung beträgt der Anteil der Neodymoxide am rot gefärbten Glas zwischen 0,5 und 5 Gew.-% und zusätzlich oder alternativ der Anteil der Antimonoxide am rot gefärbten Glas zwischen 0,3 und 3,5 Gew.-% und zusätzlich oder alternativ der Anteil der Zinnoxide am rot gefärbten Glas zwischen 0,5 und 4 Gew.-%.

In einer weiteren Ausführungsform der Erfindung sind dem Glas weitere Additive beigesetzt, die die Rotfärbung brillanter gestalten und dabei die Farbe bzw. die farbgebenden Stoffe weiter stabilisieren. Dabei kann vorgesehen sein, dass diese weiteren Additive AgCl₂ in einem Anteil am Glas von höchstens 0,5 Gew.-% und zusätzlich oder alternativ Fe₂O₃ in einem Anteil am Glas von höchstens 0,5 Gew.-% und zusätzlich oder alternativ SnCl₂ in einern Anteil am Glas von höchstens 4 Gew.-% und zusätzlich oder alternativ SnO₂ in einern Anteil am Glas von höchstens 4 Gew.-% umfassen.

In einer weiteren Ausführungsform der Erfindung ist der Farbort nach DIN 5033 des rot gefärbten Glases innerhalb eines Parallelogramms mit den Eckkordinaten x = 0,53, y = 0,39 und x = 0,61, y = 0,39 und x = 0,7, y = 0,3 und x = 0,62, y = 0,3 gemäß der Normfarbtafel nach DIN 5033 angeordnet, wobei sich die x und y-Werte auf Normlicht D 65 und einen 2°-Beobachter beziehen.

In einer besonders bevorzugten Ausführungsform der Erfindung ist die Transmission des rot gefärbten Glases bei Normlicht D65 und einen 2°-Beobachter über einem Mindestwert von 25 % liegend, bezogen auf den über den Wellenlängenbereich des sichtbaren Lichts integrierten Wert. Es ist aber auch denkbar, dass die Transmission mindestens 30 oder mindestens 35 % beträgt.

Das Grundglas umfasst folgende Bestandteile mit folgenden Massenanteilen:

| Oxid/Stoff | Gew.-% | |
|---|---|---|
| | von | bis |
| SiO₂ | 50 | 75 |
| K₂O | 0 | 12 |
| Na₂O | 8 | 15 |
| Li₂O | 0 | 5 |
| ZnO | 0 | 13 |
| CaO | 0 | 11 |
| MgO | 0 | 7 |
| BaO | 0 | 10 |
| Al₂O₃ | 0 | 4 |
| ZrO₂ | 0 | 2 |
| B₂O₃ | 0 | 4 |
| F | 0 | 3 |
| Cl | 0 | 2,5 |

Die Erfindung betrifft weiters ein Verfahren zur Herstellung eines rot gefärbten Glases, welches insbesondere wie oben beschrieben ausgebildet ist, wobei zunächst die Bestandteile eines Grundglases mit farbgebenden Additiven umfassend Kupferoxide und Neodymoxide und mit Reduktionsmiteln umfassend Zinnoxide und mit Stabilisierungsmitteln umfassend Antimonoxide vermengt werden, wobei der Anteil der Kupferoxide zwischen 0,02 und 0,08 Gew.-% beträgt.

In an sich bekannter Art und Weise werden die vermengen Stoffe verschmolzen und anschließend abgekühlt. Dieses Abkühlen kann darüber hinaus gewisse Formgebungsverfahren, wie zum Beispiel Ziehen, Blasen, Pressen oder Schleudern umfassen. Der Abkühlprozess ist für die Ausbildung der roten Farbe nicht weiter wesentlich.

In einem weiteren Erhitzungsprozess, dem sogenannten Tempern, haben die Reduktionsmittels und die Stabilisierungsmittel für die farbgebenden Additive, die weiter oben beschriebene Wirkungsweise.

Das Kupferoxid wird zu kolloidalem, rot färbendem metallischem Kupfer reduziert, das mittels der Reduktionsmittel aus den Oxiden in metallisch nullwertiger Form ausgeschieden wird. Zum Erhalt der vollen Farbsättigung wird die Temperatur während des Temperns für eine gewisse Zeit über einer Mindestschwelle gehalten, sodass sich genügend große Metallkolloide, die für die Farbe verantwortlich sind, bilden können. Die genauen Prozessparameter des Temperns bestimmen den Farbort des rot gefärbten Glases.

In bevorzugten Ausführungsformen des erfindungsgemäßen Verfahrens, sind für den Anteil der Neodymoxide bzw. der Zinnoxide und der Antimonoxide die weiter oben angeführten Werte vorgesehen. Ebenso ist in einer bevorzugten Ausführungsform vorgesehen, dass die Kupferoxide als Kupfer(I)-Oxid und zusätzlich oder alternativ die Zinnoxide als SnO ausgebildet sind bzw. in dieser Form in das Glas eingebracht werden, d.h. mit den Bestandteilen des Grundglases vermengt werden. Es ist aber auch denkbar als Kupferoxide Kupfer(II)-Oxid (CuO) und/oder als Reduktionsmittel SnO₂ vorzusehen. Auch für die weiteren Additive, die zur weiteren Verbesserung der Farbbrillanz und der Stabilität der farbgebenden Stoffe bzw. der Farbe vorgesehen sind, sind in einer Ausführungsform des erfindungsgemäßen Verfahrens die oben angeführten chemischen Stoffe mit den zugehörigen Werten vorgesehen.

Als Grundglas kann in einer Ausführungsform des erfindungsgemäßen Verfahrens ein Grundglas mit den oben erwähnten Bestandteilen verwendet werden.

In einer weiteren Ausführungsform erfolgt die Verschmelzung der vermengten Stoffe bei einer Temperatur zwischen 1350° und 1500°, vorzugweise unter reduzierenden Bedingungen, um die Elemente Sn, Sb und Cu im gewünschten Oxidationszustand zu halten.

In einer weiteren Ausführungsform der Erfindung erfolgt das Tempern bei einer Temperatur zwischen 400 und 550° C, vorzugsweise zwischen 440° und 520° C. Dieses Anlaufen, das für die konkrete Farbwirkung bzw. Farbgebung mit entscheidend ist, wird für eine Dauer zwischen einer und 40 Stunden gehalten.

In einem konkreten Ausführungsbeispiel der Erfindung weist das Grundglas folgende Bestandteile auf.

| Oxid/Stoff | Gew.% |
|---|---|
| SiO₂ | 60,8 |
| K₂O | 8,7 |
| Na₂O | 9,3 |
| ZnO | 9,3 |
| CaO | 0,4 |
| Al₂O₃ | 0,3 |
| B₂O₃ | 3,3 |
| F | 1,0 |
| Cl | 0,6 |

Als farbgebende Additive sind Kupfer(I)- Oxid mit einem Anteil von 0,05 Gew.-% und Nd₂O₃ mit einem Anteil von 2,3 Gew.-% vorgesehen. Als Reduktionsmittel dienen SnO und SnO₂, die in Summe einen Anteil von 1,8 Gew.-% am rot gefärbten Glas aufweisen. Als Stabilisierungsmittels kommt Sb₂O₃ mit einem Anteil von 2,2 Gew.-% zum Einsatz.

Weitere Einzelheiten und Vorteile der vorliegenden Erfindung werden anhand der Figurenbeschreibung unter Bezugnahme auf die Zeichnungen im Folgenden näher erläutert.
Darin zeigt:
- Fig. 1: ein Parallelogramm entsprechend der Normfarbtafel nach DIN 5033, in dessen Inneren der Farbort eines rot gefärbten Glases in einer Ausführungsform der Erfindung ist und
- Fig. 2: ein Vergleich von Absorptionsspektren zur Illustration der Vorteile des rot erfindungsgemäßen rot gefärbten Glases.

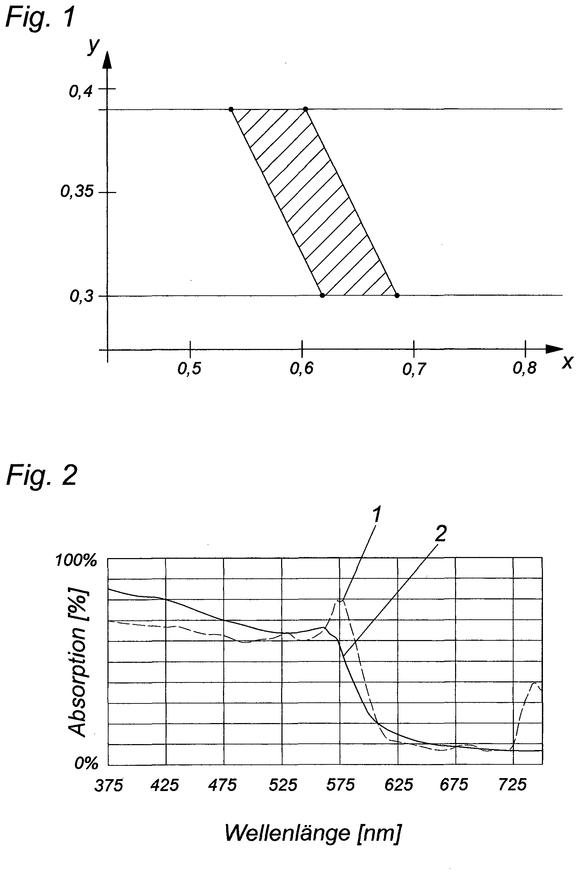

Fig. 1 zeigt ein Parallelogramm mit den Eckpunkten x = 0,53, y = 0,39 und x = 0,61, y = 0,39 und x = 0,7, y = 0,3 und x = 0,62, y = 0,3 entsprechend der DIN 5033. Der Farbort des rot gefärbten Glases in einer Ausführungsform der Erfindung liegt im Inneren dieses Parallelogramms. Ein derartiges Rot zeichnet sich durch eine hohe Brillanz und eine hohe Farbsättigung aus.

Fig. 2 zeigt zwei Absorptionsspektren, wobei die gestrichelte Kurve 1 einem erfindungsgemäßen rot gefärbtem Glas entspricht, während die durchgezogene Kurve 2 einem rot gefärbten Glas, das kein Neodymoxid aufweist, entspricht. Erkennbar ist, dass bei einer Wellenlänge von ca. 575 nm das rot gefärbte Glas mit Neodymoxid deutlich mehr Strahlung absorbiert und dadurch eine stark abfallende Kante der Absorptionskurve 1 in Richtung höherer Wellenlängen zeigt. Dies ist nötig um eine brillante rote Farbe, die innerhalb des Bereichs zwischen 625 und 725 nm auftritt, zu erzeugen. Mit anderen Worten: nur die Absorption des für die rote Farbe tatsächlich relevanten Bereichs der Wellenlänge wird mit einem erfindungsgemäßen Glas gedämpft, wodurch sich die rote Farbe mit hoher Brillanz bei gleichzeitig hoher, über den sichtbaren Spektralbereich integrierter Transmission ergibt.

Eine Erzeugung einer derart hohen Absorption bei einer Wellenlänge von ca. 575 nm und einer zugehörigen Farbbrillanz ist ohne die Zugabe von Neodymoxid nicht möglich. In diesem Fall würde das rot gefärbte Glas eine deutlich geringere Transmission aufweisen. Durch das Neodymoxid wird die Absorptionskante des Glases im Bereich von ca. 575 nm steiler bzw. kann eine scharfe Transmissionskante zu höheren Wellenlängen erzeugt werden. Durch den geringen Kupferanteil ist die Absorption im Bereich zwischen 625 und 725 nm sehr stark auf teilweise unter 10 % gedämpft. Insbesondere gilt dies für den roten Bereich von 680 nm, wodurch sich eine sehr hohe Transmission in diesem Bereich einstellt. Dies ist auch ein Grund dafür, dass die über den gesamten sichtbaren Spektralbereich integrierte Transmission einen für rot gefärbte Gläser überaus hohen Wert aufweist. Das rot gefärbte Glas der Erfindung entspricht hinsichtlich seiner optischen Qualitäten damit den aufgrund von Umweltschäden zu vermeidenden durch den Einsatz von Cadmium rot gefärbten Gläsern.

## Patentansprüche

1. Rot gefärbtes Glas umfassend die Bestandteile eines Grundglases, farbgebende Additive, Reduktionsmittel, Stabilisierungsmittel, wobei die farbgebenden Additive Kupferoxide und Neodymoxide aufweisen und wobei die Reduktionsmittel Zinnoxide aufweisen, wobei die Stabilisierungsmittel Antimonoxide aufweisen, und wobei das Grundglas folgende Bestandteile mit einem Massenanteil umfasst:
| Oxid/Stoff | Gew.-% | |
|---|---|---|
| | von | bis |
| SiO₂ | 50 | 75 |
| K₂O | 0 | 12 |
| Na₂O | 8 | 15 |
| Li₂O | 0 | 5 |
| ZnO | 0 | 13 |
| CaO | 0 | 11 |
| MgO | 0 | 7 |
| BaO | 0 | 10 |
| Al₂O₃ | 0 | 4 |
| ZrO₂ | 0 | 2 |
| B₂O₃ | 0 | 4 |
| F | 0 | 3 |
| Cl | 0 | 2,5 |
**dadurch gekennzeichnet, dass** der Anteil der Kupferoxide am rot gefärbten Glas zwischen 0,02 und 0,08 Gew.-% beträgt.

2. Glas nach Ansprüch 1, **dadurch gekennzeichnet, dass** der Anteil der Kupferoxide am rot gefärbten Glas zwischen 0,02 und 0,06 Gew.-% beträgt.

3. Glas nach Ansprüch 1 oder 2, **dadurch gekennzeichnet, dass** die Anteile der farbgebenden Additive und der Reduktionsmittel und der Stabilisierungsmittel am rot gefärbten Glas insgesamt zwischen 2 und 8 Gew.-% betragen.

4. Glas nach einem der Ansprüche 1 bis 3, **dadurch gekennzeichnet, dass** der Anteil der Neodymoxide am rot gefärbten Glas zwischen 0,5 und 5 Gew.-% beträgt und/oder der Anteil der Antimonoxide zwischen 0,3 und 3,5 Gew.-% beträgt und/oder der Anteil der Zinnoxide zwischen 0,5 und 4 Gew.-% beträgt.

5. Glas nach einem der Ansprüche 1 bis 4, **dadurch gekennzeichnet, dass** der Farbort nach DIN 5033 des Glases innerhalb eines Parallelogramms mit den Echpunkten x = 0,53, y= 0,39 und x = 0,61, y = 0,39, und x = 0,7, y = 0,3 und x = 0,62, y = 0,3 angeordnet ist, wobei sich die x und y-Werte auf Normlicht D65 und einen 2°-Beobacheter beziehen.

6. Glas nach einem der Ansprüche 1 bis 5, wobei die über den sichtbaren Spektralbereich des Lichts integrierte Transmission des Glases bei Normlicht D65 und einem 2°-Beobachter mindestens 25% beträgt.

7. Verfahren zur Herstellung eines rot gefärbten Glases, insbesondere nach einem der Ansprüche 1 bis 6, umfassend die Schritte:
a) Vermengen der Bestandteile eines Grundglases mit farbgebenden Additiven umfassend Kupferoxide und Neodymoxide und mit Reduktionsmitteln umfassend Zinnoxide und mit Stabilisierungsmitteln umfassend Antimonoxide, wobei der Anteil der Kupferoxide zwischen 0,02 und 0,08 Gew.-% beträgt, wobei das Grundglas folgende Bestandteile mit einem Massenanteil umfasst:
| Oxid/Stoff | Gew.-% | |
|---|---|---|
| | von | bis |
| SiO₂ | 50 | 75 |
| K₂O | 0 | 12 |
| Na₂O | 8 | 15 |
| Li₂O | 0 | 5 |
| ZnO | 0 | 13 |
| CaO | 0 | 11 |
| MgO | 0 | 7 |
| BaO | 0 | 10 |
| Al₂O₃ | 0 | 4 |
| ZrO₂ | 0 | 2 |
| B₂O₃ | 0 | 4 |
| F | 0 | 3 |
| Cl | 0 | 2,5 |
b) Verschmelzen der vermengten Stoffe,
c) Abkühlen der verschmolzenen Stoffe,
d) Tempern der abgekühlten verschmolzenen Stoffe.

8. Verfahren nach Ansprüch 7, **dadurch gekennzeichnet, dass** der Anteil der Kupferoxide zwischen 0,02 und 0,06 Gew.-% beträgt.

9. Verfahren nach Ansprüch 7 oder 8, **dadurch gekennzeichnet, dass** der Anteil der Neodymoxide zwischen 0,5 und 5 Gew.-% beträgt und/oder der Anteil der Zinnoxide zwischen 0,5 und 4 Gew.-% beträgt und/oder der Anteil der Antimonoxide zwischen 0,3 und 3,5 Gew.-% beträgt.

10. Verfahren nach einem der Ansprüche 7 bis 9, **dadurch gekennzeichnet, dass** die Anteile der farbgebenden Additive und der Reduktionsmittel und der Stabilisierungsmittel insgesamt zwischen 2 und 8 Gew.-% betragen.

11. Verfahren nach einem der Ansprüche 7 bis 10, **dadurch gekennzeichnet, dass** die Kupferoxide als Kupfer(I)-Oxid und/oder die Zinnoxide als SnO ins Glas eingebracht werden.

12. Verfahren nach einem der Ansprüche 7 bis 11, **dadurch gekennzeichnet, dass** weitere Additive mit den Bestandteilen des Grundglases und den farbgebenden Additiven und den Reduktionsmitteln und den Stabilisierungsmitteln vermengt werden, wobei die weiteren Additive AgCl₂ in einem Anteil von höchstens 0,5 Gew.-% und/oder Fe₂O₃ in einem Anteil von höchstens 0,5 Gew.-% und/oder SnCl₂ in einem Anteil von höchstens 4 Gew.-% und/oder SnO₂ in einem Anteil von höchstens 4 Gew.-% umfassen.

13. Verfahren nach einem der Ansprüche 7 bis 12, **dadurch gekennzeichnet, dass** das Verschmelzen der vermengten Stoffe bei einer Temperatur zwischen 1.350 und 1.500°C unter reduzierten Bedingungen erfolgt und/oder das Tempern bei einer Temperatur zwischen 400 und 550 °C, vorzugsweise zwischen 440 und 520°C, für eine Dauer zwischen einer und 40 Stunden erfolgt.

## Claims

1. Red-coloured glass comprising the components of a foundation glass, colouring additives, reducing agents, stabilising agents, the colouring additives containing copper oxides and neodymium oxides and the reducing agents containing tin oxides, the stabilising agents containing antimony oxides, and the foundation glass comprising the following components in a mass fraction of:
| Oxide/substance | wt.% | |
|---|---|---|
| | from | to |
| SiO₂ | 50 | 75 |
| K₂O | 0 | 12 |
| Na₂O | 8 | 15 |
| Li₂O | 0 | 5 |
| ZnO | 0 | 13 |
| CaO | 0 | 11 |
| MgO | 0 | 7 |
| BaO | 0 | 10 |
| Al₂O₃ | 0 | 4 |
| ZrO₂ | 0 | 2 |
| B₂O₃ | 0 | 4 |
| F | 0 | 3 |
| Cl | 0 | 2.5 |
**characterised in that** the fraction of the copper oxides in the red-coloured glass is between 0.02 and 0.08 wt.%.

2. Glass according to claim 1, **characterised in that** the fraction of the copper oxides in the red-coloured glass is between 0.02 and 0.06 wt.%.

3. Glass according to either claim 1 or claim 2, **characterised in that** the fractions of the colouring additives and the reducing agents and the stabilising agents in the red-coloured glass are in total between 2 and 8 wt.%.

4. Glass according to any of claims 1 to 3, **characterised in that** the fraction of the neodymium oxides in the red-coloured glass is between 0.5 and 5 wt.% and/or the fraction of the antimony oxides is between 0.3 and 3.5 wt.% and/or the fraction of the tin oxides is between 0.5 and 4 wt.%.

5. Glass according to any of claims 1 to 4, **characterised in that** the spectral locus according to DIN 5033 of the glass is arranged inside a parallelogram having the vertices x = 0.53, y = 0.39 and x = 0.61, y = 0.39, and x = 0.7, y = 0.3 and x = 0.62, y = 0.3, the x and y values relating to standard illuminant D65 and a 2° observer.

6. Glass according to any of claims 1 to 5, wherein the transmittance of the glass integrated over the visible spectral range of the light is at least 25% when using standard illuminant D65 and a 2° observer.

7. Method for producing a red-coloured glass, in particular according to any of claims 1 to 6, comprising the steps of:
a) mixing the components of a foundation glass with colouring additives comprising copper oxides and neodymium oxides and with reducing agents comprising tin oxides and with stabilising agents comprising antimony oxides, the fraction of the copper oxides being between 0.02 and 0.08 wt.%, the foundation glass comprising the following components having a mass fraction of:
| Oxide/substance | wt.% | |
|---|---|---|
| | from | to |
| SiO₂ | 50 | 75 |
| K₂O | 0 | 12 |
| Na₂O | 8 | 15 |
| Li₂O | 0 | 5 |
| ZnO | 0 | 13 |
| CaO | 0 | 11 |
| MgO | 0 | 7 |
| BaO | 0 | 10 |
| Al₂O₃ | 0 | 4 |
| ZrO₂ | 0 | 2 |
| B₂O₃ | 0 | 4 |
| F | 0 | 3 |
| Cl | 0 | 2.5 |
b) melting the mixed substances,
c) cooling the melted substances,
d) annealing the cooled melted substances.

8. Method according to claim 7, **characterised in that** the fraction of the copper oxides is between 0.02 and 0.06 wt.%.

9. Method according to either claim 7 or claim 8, **characterised in that** the fraction of the neodymium oxides is between 0.5 and 5 wt.% and/or the fraction of the tin oxides is between 0.5 and 4 wt.% and/or the fraction of the antimony oxides is between 0.3 and 3.5 wt.%.

10. Method according to any of claims 7 to 9, **characterised in that** the fractions of the colouring additives and the reducing agents and the stabilising agents are in total between 2 and 8 wt.%.

11. Method according to any of claims 7 to 10, **characterised in that** the copper oxides are introduced into the glass as copper(I) oxide and/or the tin oxides are introduced into the glass as SnO.

12. Method according to any of claims 7 to 11, **characterised in that** further additives are mixed with the components of the foundation glass and with the colouring additives and with the reducing agents and with the stabilising agents, the further additives comprising AgCl₂ in a fraction of at most 0.5 wt.% and/or Fe₂O₃ in a fraction of at most 0.5 wt.% and/or SnCl₂ in a fraction of at most 4 wt.% and/or SnO₂ in a fraction of at most 4 wt.%.

13. Method according to any of claims 7 to 12, **characterised in that** the mixed substances are melted at a temperature of between 1,350 and 1,500°C in reducing conditions and/or the annealing takes place at a temperature of between 400 and 550°C, preferably between 440 and 520°C, for a duration of between one and 40 hours.

## Revendications

1. Verre teinté en rouge comprenant les constituants d'un verre de base, des additifs colorants, des agents réducteurs, des agents stabilisants, les additifs colorants présentant des oxydes de cuivre et des oxydes de néodyme, et les agents réducteurs présentant des oxydes d'étain, les agents stabilisants présentant des oxydes d'antimoine, et le verre de base comprenant les constituants suivants à raison d'une fraction massique :
| Oxyde/substance | % en poids | |
|---|---|---|
| | de | à |
| SiO₂ | 50 | 75 |
| K₂O | 0 | 12 |
| Na₂O | 8 | 15 |
| Li₂O | 0 | 5 |
| ZnO | 0 | 13 |
| CaO | 0 | 11 |
| MgO | 0 | 7 |
| BaO | 0 | 10 |
| Al₂O₃ | 0 | 4 |
| ZrO₂ | 0 | 2 |
| B₂O₃ | 0 | 4 |
| F | 0 | 3 |
| Cl | 0 | 2,5 |
**caractérisé en ce que** la proportion des oxydes de cuivre dans le verre teinté en rouge est comprise entre 0,02 et 0,08 % en poids.

2. Verre selon la revendication 1, **caractérisé en ce que** la proportion des oxydes de cuivre dans le verre teinté en rouge est comprise entre 0,02 et 0,06 % en poids.

3. Verre selon la revendication 1 ou 2, **caractérisé en ce que** les proportions des additifs colorants et des agents réducteurs et des agents stabilisants dans le verre teinté en rouge totalisent entre 2 et 8 % en poids.

4. Verre selon l'une des revendications 1 à 3, **caractérisé en ce que** la proportion des oxydes de néodyme dans le verre teinté en rouge est comprise entre 0,5 et 5 % en poids et/ou la proportion des oxydes d'antimoine est comprise entre 0,3 et 3,5 % en poids et/ou la proportion des oxydes d'étain est comprise entre 0,5 et 4 % en poids.

5. Verre selon l'une des revendications 1 à 4, **caractérisé en ce que** le locus de couleur selon DIN 5033 du verre au sein d'un parallélogramme est ordonné avec les vertex x = 0,53, y = 0,39 et x = 0,61, y = 0,39, et x = 0,7, y = 0,3 et x = 0,62, y = 0,3, les valeurs de x et de y se rapportant à la lumière normale D65 et à un observateur de 2°.

6. Verre selon l'une des revendications 1 à 5, dans lequel la transmission intégrée du verre sur le domaine spectral visible de la lumière, à la lumière normale D65 et à un observateur de 2°, est d'au moins 25 %.

7. Procédé de fabrication d'un verre teinté en rouge, en particulier selon l'une des revendications 1 à 6, comprenant les étapes :
a) de mélange des constituants d'un verre de base avec des additifs colorants comprenant des oxydes de cuivre et des oxydes de néodyme et avec des agents réducteurs comprenant des oxydes d'étain et avec des agents stabilisants comprenant des oxydes d'antimoine, la proportion des oxydes de cuivre étant comprise entre 0,02 et 0,08 % en poids, le verre de base comprenant les constituants suivants à raison d'une fraction massique :
| Oxyde/substance | % en poids | |
|---|---|---|
| | de | à |
| SiO₂ | 50 | 75 |
| K₂O | 0 | 12 |
| Na₂O | 8 | 15 |
| Li₂O | 0 | 5 |
| ZnO | 0 | 13 |
| CaO | 0 | 11 |
| MgO | 0 | 7 |
| BaO | 0 | 10 |
| Al₂O₃ | 0 | 4 |
| ZrO₂ | 0 | 2 |
| B₂O₃ | 0 | 4 |
| F | 0 | 3 |
| Cl | 0 | 2,5 |
b) de fusion des substances mélangées,
c) de refroidissement des substances fusionnées,
d) de recuit des substances fusionnées refroidies.

8. Procédé selon la revendication 7, **caractérisé en ce que** la proportion des oxydes de cuivre est comprise entre 0,02 et 0,06 % en poids.

9. Procédé selon la revendication 7 ou 8, **caractérisé en ce que** la proportion des oxydes de néodyme est comprise entre 0,5 et 5 % en poids et/ou que la proportion des oxydes d'étain est comprise entre 0,5 et 4 % en poids et/ou que la proportion des oxydes d'antimoine est comprise entre 0,3 et 3,5 % en poids.

10. Procédé selon l'une des revendications 7 à 9, **caractérisé en ce que** les proportions des additifs colorants et des agents réducteurs et des agents stabilisants totalisent entre 2 et 8 % en poids.

11. Procédé selon l'une des revendications 7 à 10, **caractérisé en ce que** les oxydes de cuivre sont introduits dans le verre en tant qu'oxyde de cuivre(I) et/ou les oxydes d'étain sont introduits dans le verre en tant que SnO.

12. Procédé selon l'une des revendications 7 à 11, **caractérisé en ce que** d'autres additifs sont mélangés aux constituants du verre de base et aux additifs colorants et aux agents réducteurs et aux agents stabilisants, les autres additifs comprenant du AgCl₂ à raison d'une proportion d'au plus 0,5 % en poids et/ou du Fe₂O₃ à raison d'une proportion d'au plus 0,5 % en poids et/ou du SnCl₂ à raison d'une proportion d'au plus 4 % en poids et/ou du SnO₂ à raison d'une proportion d'au plus 4 % en poids.

13. Procédé selon l'une des revendications 7 à 12, **caractérisé en ce que** la fusion des substances mélangées a lieu à une température comprise entre 1 350 et 1 500 °C dans des conditions réduites et/ou le recuit a lieu à une température comprise entre 400 et 550 °C, de préférence entre 440 et 520 °C, pour une durée comprise entre une et 40 heures.
